Europäisches Patentamt

(19) European Patent Office

Office européen des brevets

(11) Numéro de publication: **0 095 981**
**B1**

(12) **FASCICULE DE BREVET EUROPEEN**

(45) Date de publication du fascicule du brevet:
12.03.86

(51) Int. Cl.⁴: **A 01 K 5/02,** B 65 G 59/02

(21) Numéro de dépôt: 83401071.2

(22) Date de dépôt: 27.05.83

(54) **Distributeur de produits.**

(30) Priorité: 28.05.82 FR 8209350

(43) Date de publication de la demande:
07.12.83 Bulletin 83/49

(45) Mention de la délivrance du brevet:
12.03.86 Bulletin 86/11

(84) Etats contractants désignés:
CH DE GB IT LI NL SE

(56) Documents cités:
AU - B - 452 197
DE - C - 142 325
FR - A - 2 302 945

(73) Titulaire: Agot, Aimé, 18, rue du Petit Pont,
F-78310 Maurepas (FR)

(72) Inventeur: Agot, Aimé, 18, rue du Petit Pont,
F-78310 Maurepas (FR)

ACTORUM AG

# Description

La présente invention concerne un distributeur de produits divers, solides ou liquides, notamment alimentaires, en particulier pour alimenter automatiquement des animaux.

Dans les distributeurs classiques, les produits à distribuer sont introduits dans des trémies dans lesquelles les produits s'écoulent par gravité.

Ces modes de distribution présentent notamment l'inconvénient de ne pas assurer, dans toutes les circonstances, un écoulement régulier du produit à distribuer.

Ainsi, dans le cas des produits solides, on constate souvent des variations de débit d'écoulement de ces produits, ou même des arrêts d'écoulement dus à la hauteur de charge variable des trémies et au tassement plus ou moins important des produits.

Par ailleurs, il est pratiquement impossible, avec ces distributeurs fonctionnant par gravité, de distribuer de faibles quantités de produits.

Dans le brevet FR-A N° 2302945, on a proposé un distributeur de marchandises comprenant un magasin contenant les marchandises à distribuer muni à sa partie inférieure d'un plateau élévateur et des moyens prévus à la partie supérieure dudit magasin pour prélever une quantité donnée de marchandises et pour la diriger vers une sortie de distribution. Toutefois, le magasin n'est pas adapté pour recevoir un conteneur des marchandises à distribuer coopérant avec le plateau élévateur et ne comporte pas un module de distribution communiquant avec la partie supérieure du conteneur.

Le but de la présente invention est de remédier aux inconvénients des réalisations connues en créant un distributeur assurant la distribution des produits dans des conditions optimales quelles que soient la nature et les quantités de produits à distribuer.

Le distributeur de produits visé par l'invention comprend un magasin recevant le produit à distribuer, des moyens prévus à la partie supérieure du magasin pour prélever dans ce magasin une quantité donnée de produits et déplacer cette quantité vers une sortie de distribution, la partie inférieure du magasin comprenant un plateau élévateur agencé pour déplacer vers le haut du magasin le produit à distribuer.

Suivant l'invention, ce distributeur est caractérisé en ce que le magasin est adapté pour la réception d'un conteneur qui renferme le produit à distribuer soit en forme de blocs, soit sous forme de liquide, soit en grains ou en poudre, le couvercle et une zone du fond du conteneur ayant été préalablement découpés, notamment en ce qui concerne le fond pour permettre l'insertion du plateau élévateur, et en ce que les moyens prévus à la partie supérieure du magasin pour prélever et distribuer une quantité donnée de produits font partie d'un module amovible de distribution approprié à la nature du produit à distribuer, ce module ayant une ouverture de communication ou de liaison avec la partie supérieure du conteneur, la partie supérieure du magasin étant adaptée à recevoir, de façon interchangeable, les divers modules de distribution correspondant à la nature du produit à distribuer.

Ainsi, des quantités données de produits sont prélevées successivement à la partie supérieure du conteneur puis évacuées vers la sortie du distributeur.

Grâce aux dispositions prévues dans le distributeur conforme à l'invention, il est possible de régler de façon très précise les quantités de produits prélevées en haut du conteneur, en synchronisant les mouvements d'élévation du plateau avec ceux des moyens de prélèvement. De plus, dans ce mode de distribution, les variations de débit en fonction de la quantité de produits contenus dans le conteneur et les risques d'obstruction sont complètement évités.

Le distributeur conforme à l'invention est adapté à la distribution aussi bien des produits solides sous forme de blocs, des produits en grains ou en poudre et des liquides.

Dans le cas de la distribution des solides sous forme de blocs, de préférence, le module de distribution communique avec le magasin par une ouverture correspondant sensiblement à la section horizontale du magasin et comporte un poussoir mobile en translation dans le plan de l'ouverture précitée vers la sortie de distribution.

Dans le cas de la distribution des liquides, de préférence, le conteneur comprend un récipient déformable renfermant le liquide, et qui communique au moyen d'une électrovanne avec une chambre de dosage ménagée dans le module de distribution, cette chambre de dosage étant fermée par une électrovanne communiquant avec la sortie de distribution et cette chambre renfermant un piston mobile en translation vers la sortie précitée.

Dans le cas de la distribution des produits solides en grains ou en poudre, de préférence, le module de distribution comprend à sa partie inférieure une vis d'Archimède entraînée en rotation et dont les pales sont agencées pour prélever les produits contenus dans le conteneur et les introduire dans une chambre de dosage ménagée dans le module de distribution, cette dernière comprenant un piston mobile en translation vers la sortie de distribution du produit.

Les mouvements successifs d'élévation du plateau et de déplacement des moyens de prélèvement des produits peuvent être commandés de façon entièrement automatique au moyen de détecteurs de fins de course reliés à un microprocesseur logé à l'intérieur du magasin.

Par ailleurs, la partie supérieure du magasin est adaptée pour recevoir de façon interchangeable les différents modules de distribution adaptés aux divers produits à distribuer.

D'autres particularités et avantages de l'invention apparaîtront encore dans la description ci-après.

Aux dessins annexés, donnés à titre d'exemples non limitatifs:

— la fig. 1 est une vue en perspective d'un distributeur conforme à l'invention adapté à la distribution de produits en blocs contenus dans un conteneur;

— la fig. 2 est une vue en coupe longitudinale du distributeur équipé de son récipient de collecte de produits;

— la fig. 3 est une vue en perspective d'un conteneur pour produits solides;

— la fig. 4 montre la plaquette intercalaire destinée à supporter les produits et à permettre l'introduction du plateau d'élévation sous ces produits;

— la fig. 5 montre la partie découpée dans le fond du conteneur;

— la fig. 6 montre le couvercle découpé dans la partie supérieure du conteneur;

— la fig. 7 est une vue en coupe longitudinale du conteneur renfermant un récipient souple rempli de liquide;

— la fig. 8 est une vue en coupe longitudinale d'un module de distribution adapté à la distribution d'un liquide;

— la fig. 9 est une vue en coupe longitudinale du conteneur renfermant un récipient rempli de produits en grains;

— la fig. 10 est une vue en coupe longitudinale d'un module de distribution adapté à la distribution de produits en grains, en poudre ou en farine;

— la fig. 11 montre un mélangeur liquide-solide placé entre la sortie d'un module de distribution et un récipient de collecte.

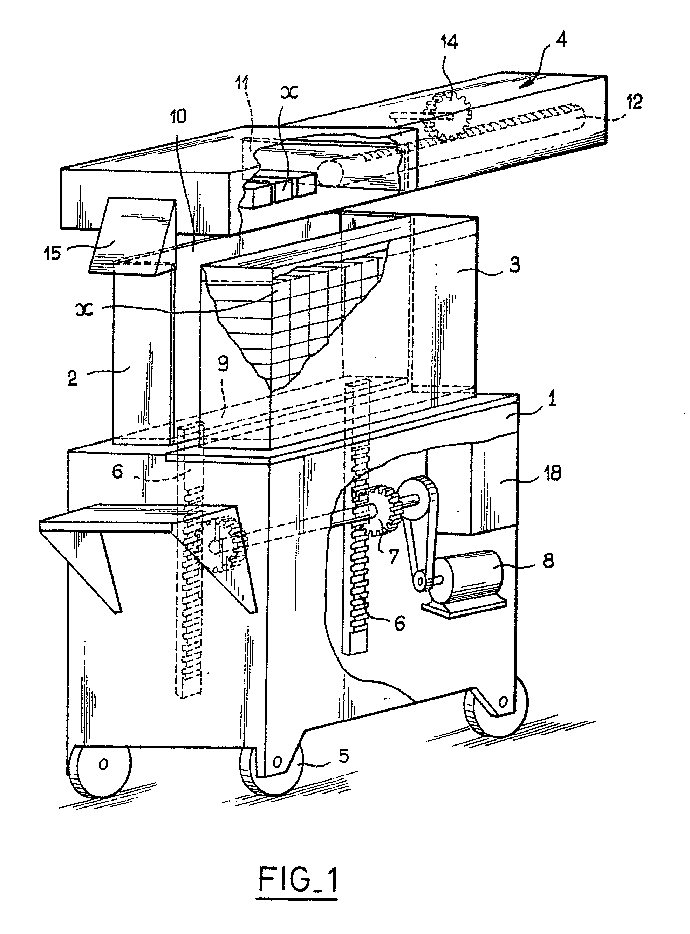

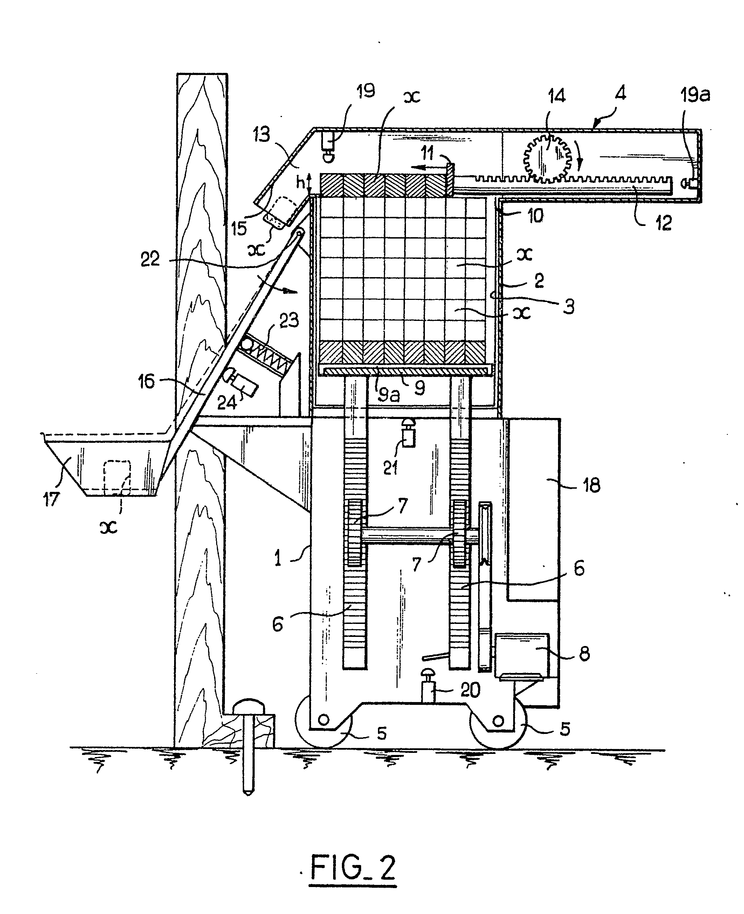

Dans la réalisation des fig. 1 et 2, le distributeur de produits selon l'invention comprend principalement un bâti inférieur 1 portant un magasin 2 qui reçoit un conteneur 3 renfermant les produits à distribuer x, y ou z, surmonté par un module 4 de dosage et de distribution de ces produits. Dans cet exemple, les produits sont sous forme de blocs parallélépipédiques.

Le bâti inférieur 1 est réalisé par exemple en tôle et sa forme est géométrique. Il comporte de préférence des roulettes 5 pour faciliter le déplacement de l'appareil.

Ce bâti 1 renferme deux crémaillères verticales 6 sur lesquelles sont engrenées des roues dentées 7, entraînées en rotation par un moteur électrique 8. Ces deux crémaillères 6 portent un plateau élévateur 9 engagé dans la partie inférieure du conteneur 3. Ce plateau élévateur 9 porte une plaque intercalaire 9a sur lequel les produits x sont empilés suivant plusieurs rangées en formant une charge parallélépipédique dont le volume est adapté à celui du conteneur 3.

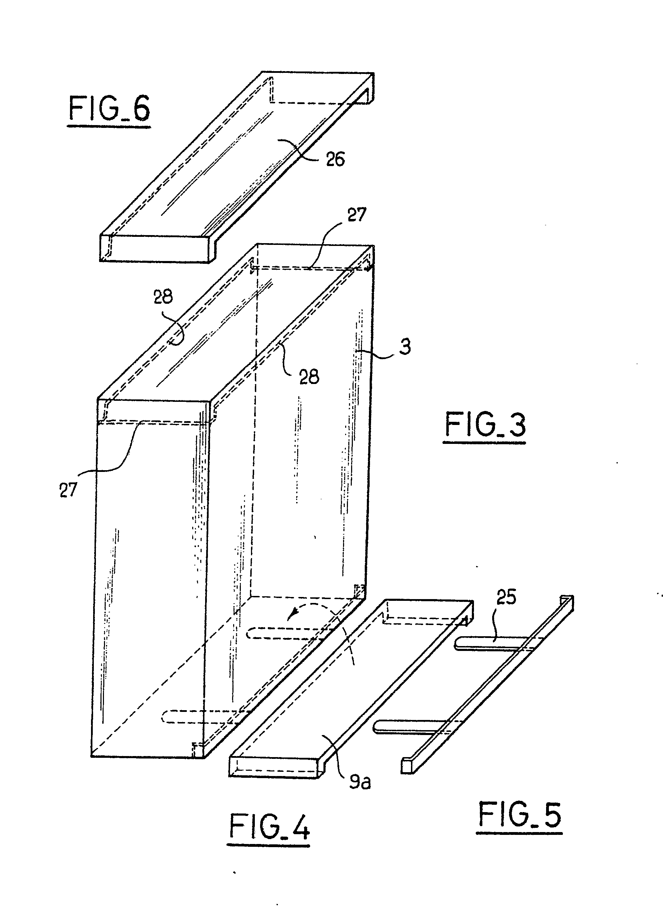

Le module de distribution 4 s'étend perpendiculairement à l'axe vertical du magasin 2 et communique avec l'intérieur de ce dernier par une ouverture 10 constituée par le couvercle découpé (voir fig. 6) du conteneur 3 dont la section correspond à la section horizontale de ce magasin.

Le module de distribution 4 renferme un poussoir 11 fixé à l'extrémité d'une crémaillère 12 mobile en translation dans le plan de l'ouverture 10 et vers une sortie de distribution 13 opposée à ce poussoir 11. Sur cette crémaillère est engrenée une roue dentée 14 entraînée en rotation par un moteur non représenté.

L'ouverture de sortie 13 est prolongée par un déversoir 15 incliné vers le bas. Sous ce dernier s'étend un plan incliné 16 à l'extrémité duquel est fixé un récipient 17 de collecte des produits x. Le refus de produits x peut être évacué automatiquement par le fond de ce récipient 17.

Le distributeur comprend des moyens commandant automatiquement et de façon successive l'élévation du plateau 9, suivant une hauteur h correspondant à la hauteur d'une rangée de produits x en forme de blocs afin d'engager la rangée supérieure de ceux-ci dans le module de distribution 4, comme montré sur la fig. 2. Ces moyens peuvent être un microprocesseur programmé, logé dans un coffret 18, disposé dans le bâti 1.

En outre, des moyens sont prévus pour commander automatiquement, à partir de la position représentée sur la fig. 2, le déplacement du poussoir 11 vers la sortie de distribution 13, afin de déplacer la rangée supérieure de blocs x vers cette sortie, puis le retour de ce poussoir 11 en position arrière.

La position de fin de course du poussoir 11 située sur la gauche de la fig. 2 est déterminée par un détecteur 19 qui commande le retour du poussoir 11. D'autres détecteurs 20, 21 placés à l'intérieur du bâti 1 détectent les fins de course du plateau élévateur 9.

Le plan incliné 16 auquel est fixé le récipient de collecte 17 des produits x est articulé suivant un axe 22 situé sous le déversoir 15 et prend appui sur un ressort 23. Ce plan incliné 16 coopère, d'autre part, avec un détecteur 24 agencé pour interdire la distribution des produits x lorsque le récipient de collecte 17 contient une quantité de produits x non prélevée.

Le magasin 2 est ouvert sur sa face avant pour recevoir un conteneur 3 parallélépipédique en carton, servant d'emballage aux blocs de produits x (voir les fig. 1 et 3).

Comme indiqué sur les fig. 3 et 5, la partie inférieure du conteneur 3 comporte une zone découpée 25 qui permet le passage du plateau élévateur 9 et des deux crémaillères 6.

D'autre part, comme montré sur les fig. 3 et 6, la partie supérieure du conteneur 3 comporte un couvercle également prédécoupé 26. Après enlèvement de ce couvercle 26, il existe sur le bord supérieur du conteneur 3 deux échancrures opposées 27 bordées par des rebords longitudinaux 28 destinés à caler latéralement la rangée supérieure de produits x.

On va maintenant exposer le fonctionnement du distributeur que l'on vient de décrire.

On introduit dans le magasin 2 un conteneur 3 rempli de produits en blocs x qui prennent ainsi place sous le module de distribution 4, tandis que la plaquette intercalaire 9a disposée sous les produits x prend appui sur le plateau élévateur 9. Sur information de distribution, le microprocesseur met le moteur 8 en route. Le plateau 9 est poussé vers le haut par les crémaillères verticales 6. Dès qu'une rangée de produits x fait saillie à l'intérieur du module de distribution 4, suivant une hauteur prédéterminée, un détecteur arrête le moteur 8 et le plateau 9 s'immobilise.

Le poussoir 11 se déplace alors vers la sortie 13, ce qui a pour effet de pousser vers cette sortie la rangée précitée de produits x en blocs ou en portions qui tombent ensuite dans le récipient de collecte 17. Lorsque le poussoir 11 arrive en fin de course, le détecteur 19 commande son retour en position de départ. Dans cette position, le détecteur 19a commande l'arrêt du moteur d'entraînement de la roue dentée 14.

Le moteur 8 se remet ensuite en route pour déplacer vers le haut le plateau 9 suivant une nouvelle hauteur h et les opérations précitées se poursuivent dans l'ordre indiqué plus haut.

Lorsque le récipient de collecte 17 contient la quantité désirée de produits x, le plan incliné 16 prend appui sur le détecteur 24 qui interdit une distribution supplémentaire.

Lorsque le plateau 9 arrive en fin de course supérieure, ce qui signifie que le conteneur 3 est vide, le plateau 6 revient à sa position basse de départ et émet un signal. Pour poursuivre la distribution, il faut alors mettre en place un conteneur plein.

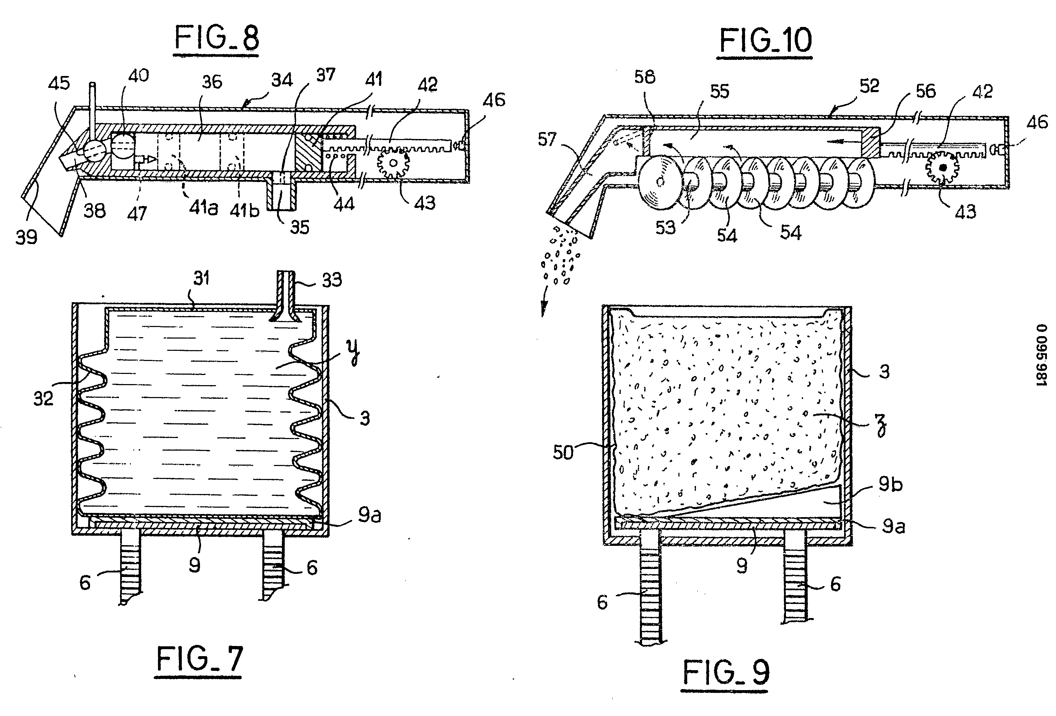

Dans la réalisation de la fig. 7, le conteneur 3 renferme un récipient 31 en matière souple, telle qu'une matière plastique contenant un liquide y et dont les parois 32 sont en accordéon. La partie supérieure de ce récipient 31 porte un goulot 33.

Le module de dosage et de distribution 34 représenté sur la fig. 8 comporte un orifice d'entrée 35 adapté à recevoir le goulot 33 du récipient 31. Cet orifice d'entrée 35 communique avec une chambre de dosage 36 au moyen d'une électrovanne 37. Cette chambre de dosage 36 comporte près de sa sortie 38, adjacente au déversoir 39, une autre électrovanne 40. A l'opposé de celle-ci, un piston 41 est mobile en translation à l'intérieur de la chambre 36 vers sa sortie 38. Le déplacement de ce piston 41 est commandé au moyen d'une crémaillère 42 et d'une roue dentée 43 entraînée en rotation par un moteur. Par ailleurs, un ressort taré 44 inséré entre le piston 41 et la paroi arrière de la chambre 36 fournit l'information que cette chambre 36 est pleine.

La sortie 38 peut encore comporter une électrovanne 45 pour commander éventuellement l'introduction d'eau ou d'un autre liquide pour diluer le liquide y.

Le fonctionnement de ce distributeur de liquide est le suivant:

Au départ, l'électrovanne 40 est fermée et l'électrovanne 37 est ouverte.

Le plateau 9 s'élève en comprimant le récipient 31, ce qui a pour effet d'expulser le liquide y dans la chambre de dosage 36.

Lorsque le plateau 9 s'est déplacé suivant une hauteur correspondant à un volume de liquide y égal au volume intérieur de la chambre de dosage 36, cette dernière est complètement remplie de liquide. Un réglage mécanique agissant sur la course du piston 41 permet de régler le volume de la chambre de dosage 36. On peut ainsi limiter la course à la position 41b indiquée à la fig. 8. Sur information donnée par le ressort 44 et son détecteur, simultanément, le plateau 9 s'arrête et l'électrovanne 37 se ferme. Le piston 41 est alors déplacé vers la sortie 38 et, simultanément, l'électrovanne 40 s'ouvre. Le liquide y est ainsi expulsé par la sortie 38 de la chambre de distribution. En fin de course du piston (voir position en pointillé 41a sur la fig. 8), un détecteur non représenté commande le retour à la positon du départ de ce piston. Dans cette positon, le détecteur 46 arrête le moteur d'entraînement de la roue dentée 43.

Dans la réalisation de la fig. 9, le conteneur renferme un récipient 50 en matière souple telle que du papier, ouvert vers le haut et renfermant un produit z en grains ou en poudre. Dans cet exemple, la plaquette 9a qui repose sur le plateau élévateur 9 porte une cale 9b permettant d'incliner le fond du récipient 50.

Le module de distribution 52, représenté sur la fig. 10, est destiné à être placé sur le conteneur 3. Ce module 52 comprend à sa partie inférieure une vis d'Archimède 53 dont les pales 54 sont destinées à pénétrer dans le produit z. Ces pales 54, conformées en cuillère, sont capables de prélever le produit z contenu dans le récipient 50 et de l'introduire dans une chambre de dosage 55. Cette dernière comprend un piston 56 mobile en translation vers la sortie 57 de distribution du produit z.

Des moyens analogues à ceux décrits précédemment commandent automatiquement et par étapes successives l'élévation du plateau 9 disposé sous le récipient 50, vers le module de distribution 52 suivant une hauteur correspondant à un volume de produits sensiblement égal à celui de la chambre de dosage 55.

D'autres moyens appropriés commandent la rotation de la vis d'Archimède 53 pendant la durée nécessaire au remplissage de la chambre 55.

Une électrovanne 58 placée près de la sortie de distribution ferme cette dernière pendant la durée nécessaire au remplissage de la chambre 55. Lorsque cette dernière est remplie, l'électrovanne 58 s'ouvre automatiquement et le piston 56 se déplace vers la sortie 57 en expulsant ainsi le produit z par cette sortie.

Un détecteur de fin de course commande alors le retour du piston 56 en position inactive.

Le distributeur que l'on vient de décrire présente de nombreux avantages par rapport aux réalisations connues.

Le fonctionnement du distributeur peut être entièrement automatique et la distribution des produits est réalisée dans tous les cas, d'une manière très précise, sans variation de débit ni risque d'obstruction.

Le distributeur conforme à l'invention convient à la fois aux produits sous forme de blocs préformés, tels que des bûches, des pains, des briquettes, des tablettes à croquer, ou aux liquides ou encore aux produits en grains ou en poudre, tels que farines, granulés, céréales et analogues.

Pour adapter le distributeur à ces divers produits, il suffit de remplacer le module de distribution par un autre module approprié et de disposer dans le magasin 2 et sur le plateau élévateur 9 le conteneur 3 approprié renfermant le produit x, y ou z à distribuer.

Ce distributeur peut servir à l'alimentation automatique des animaux d'élevage, de laboratoire et autres.

Un tel distributeur peut également être utilisé pour alimenter automatiquement des cheminées ou des chaudières en combustibles et des cuves ou des réacteurs en produits chimiques.

Etant donné que le distributeur possède des modules de dosage et de distribution interchangeables, il est possible de distribuer successivement, avec le même appareil, des produits de natures différentes.

Bien entendu, l'invention n'est pas limitée aux exemples de réalisation que l'on vient de décrire, et on peut apporter à ceux-ci de nombreuses modifications, sans sortir du cadre de l'invention.

Ainsi, les modules de distribution 4, 34 et 52 peuvent encore être équipés de buses de pulvérisation d'eau ou de soufflage d'air comprimé pour faciliter l'expulsion du produit ou le nettoyage de ces modules.

Par ailleurs, la distribution pourrait encore être commandée par la détection de la présence d'un animal à proximité du récipient de collecte 17 des produits.

De plus, le conteneur 3 recevant les produits en poudre, farines ou granulés peut être rechargé automatiquement à partir d'une trémie.

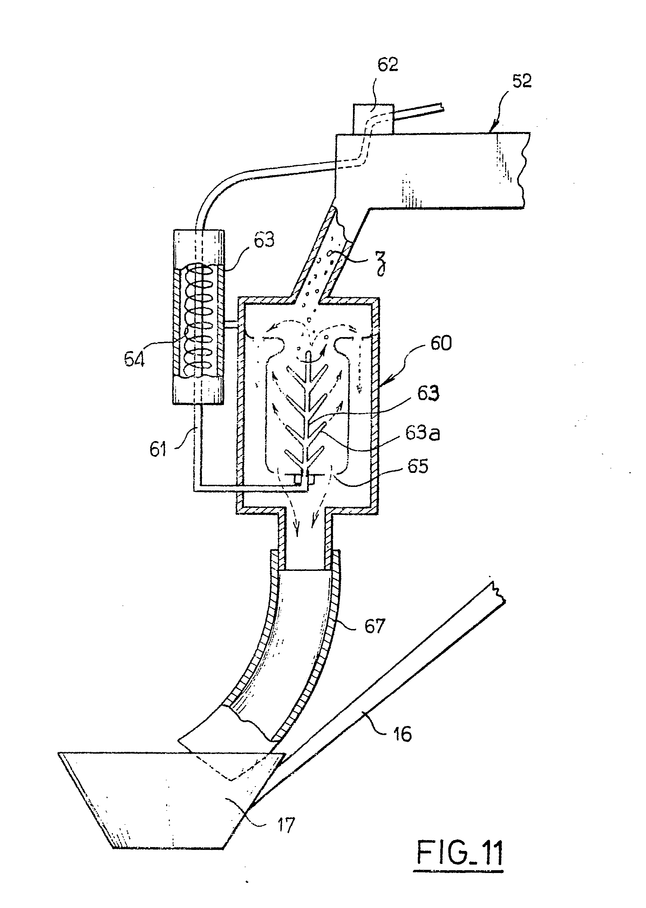

D'autre part, on peut également adapter au module de distribution 52 de produits en grains ou en poudre un mélangeur 60 tel que représenté sur la fig. 11.

Ce mélangeur 60 de forme cylindrique est relié de façon étanche au déversoir du module 52. La partie inférieure de ce mélangeur 60 est reliée au récipient de collecte 17 par un tuyau flexible 67 ou moyen analogue.

Au bas du mélangeur 60 débouche une tubulure d'amenée d'eau 61 qui est reliée à une électrovanne 62 du module 52 dont l'ouverture et la fermeture sont comandées par le microprocesseur du distributeur. Cette tubulure 61 traverse un manchon 63 renfermant une résistance chauffante 64 qui permet de chauffer l'eau à 40° C environ. La tubulure 61 communique avec un pulvérisateur 63 à ailettes 63a dont la rotation est assurée par la pression de l'eau (3 à 6 bar) amenée par la tubulure 61. Ce pulvérisateur 63 est situé dans un compartiment ouvert vers le haut et présentant à sa partie inférieure des ouvertures 65.

Lors de la rotation du pulvérisateur 63, l'eau est pulvérisée et est mélangée de façon homogène avec le produit en poudre z qui est déversé dans le mélangeur 60. En réglant les débits d'eau et de produit z on obtient un mélange homogène d'eau et de produit parfaitement dosé.

A titre d'exemple, le mélangeur 60 est parfaitement adapté au mélange et à la dilution de lait en poudre destiné à l'alimentation des veaux.

Par ailleurs, à la sortie du déversoir 15 pourrait être placé un broyeur destiné à broyer les blocs x de façon que ceux-ci arrivent à l'état de poudre dans le récipient de collecte 17.

**Revendications**

1. Distributeur de produits, comprenant un magasin (2) recevant le produit (x, y, z) à distribuer, des moyens (11 - 14 - 41 - 43 - 56) prévus à la partie supérieure du magasin pour prélever dans ce magasin une quantité donnée de produits et déplacer cette quantité vers une sortie de distribution (13, 38, 57), la partie inférieure du magasin (2) comprenant un plateau élévateur (9) agencé pour déplacer vers le haut du magasin le produit à distribuer, caractérisé en ce que le magasin (2) est adapté pour la réception d'un conteneur (3) qui renferme le produit à distribuer (x, y, z) soit en forme de blocs (x), soit sous forme de liquide (y), soit en grains ou en poudre (z), le couvercle (26) et une zone (25) du fond du conteneur ayant été préalablement découpés, notamment en ce qui concerne le fond pour permettre l'insertion du plateau élévateur (9), et en ce que les moyens (11-14, 41-43, 56) prévus à la partie supérieure du magasin pour prélever et distribuer une quantité donnée de produits font partie d'un module (4, 34, 52) amovible de distribution approprié à la nature du produit à distribuer, ce module ayant une ouverture de communication ou de liaison avec la partie supérieure du conteneur, la partie supérieure du magasin (2) étant adaptée à recevoir, de façon interchangeable, les divers modules de distribution (4, 34, 52) correspondant à la nature du produit à distribuer.

2. Distributeur conforme à la revendication 1, caractérisé en ce que le magasin (2) est ouvert sur l'une de ses faces latérales pour permettre la mise en place du conteneur (3).

3. Distributeur conforme à l'une des revendications 1 ou 2, adapté pour distribuer des produits solides sous forme de blocs (x), caractérisé en ce que le module de distribution (4) communique avec le conteneur (3) par une ouverture (10) correspondant sensiblement à la section horizontale du magasin et comporte un poussoir (11) mobile en translation dans le plan de l'ouverture précitée, vers la sortie de distribution (13).

4. Distributeur conforme à la revendication 3, caractérisé en ce qu'il comprend des moyens pour commander automatiquement et successivement l'élévation du plateau (9) vers le module de distribution (4) suivant une hauteur (h) correspondant à une rangée de blocs (x), afin d'engager cette rampe de blocs dans le module de distribution des moyens pour commander automatiquement le déplacement du poussoir (11) vers la sortie de distribution (13) afin de déplacer la rangée de blocs vers cette sortie, puis le retour de ce poussoir en position inactive.

5. Distributeur conforme à la revendication 4, caractérisé en ce que le poussoir (11) est fixé à l'extrémité d'une crémaillère (12) coopérant avec une roue dentée (14) entraînée en rotation.

6. Distributeur conforme à l'une des revendications 4 ou 5, caractérisé en ce que le retour du poussoir (11) en position de départ est commandé par un détecteur de fin de course (19).

7. Distributeur conforme à l'une des revendications 1 ou 2 adapté pour distribuer un liquide (y), caractérisé en ce que le conteneur (3) comprend un récipient déformable (31) renfermant ledit liquide, en ce que le module (34) comporte une chambre de dosage (36), ce récipient (31) communiquant avec la chambre de dosage (36) au moyen d'une électrovanne (37), en ce que cette chambre de dosage (36) comporte une électrovanne (40) près de sa sortie de distribution (38) et renferme un piston (41) mobile en translation vers la sortie précitée.

8. Distributeur conforme à la revendication 7, caractérisé en ce qu'il comprend des moyens pour commander automatiquement et sucessivement l'élévation du plateau (9) vers le module de distribution (34) suivant une hauteur correspondant à un volume de liquide (y) sensiblement égal au volume intérieur de la chambre de dosage (36), afin de remplir cette dernière par ledit liquide, des moyens pour commander automatiquement la fermeture de l'électrovanne (37) adjacente du récipient (31) et l'ouverture de l'électrovanne (40) adjacente à la sortie de distribution (38) et des moyens pour commander automatiquement le déplacement du piston (41) vers la sortie de distribution, afin d'expulser le liquide par cette sortie, puis le retour de ce piston en position de départ.

9. Distributeur conforrme à l'une des revendications 7 ou 8, caractérisé en ce que la sortie de distribution (38) comprend une électrovanne (45) pour commander l'arrivée d'eau ou de liquide de dilution.

10. Distributeur conforme à l'une des revendications 1 ou 2, adapté pour distribuer des produits en grains ou en poudre (z), caractérisé en ce que le module de distribution (52) comprend à sa partie inférieure une vis d'Archimède (53) entraînée en rotation et dont les pales (54) sont agencées pour prélever les produits (z) contenus dans le conteneur (3) et les introduire dans une chambre de dosage (55) intégrée au module (52), et en ce que cette dernière comprend un piston (56) mobile en translation vers la sortie (57) de distribution du produit.

11. Dispositif conforme à l'une des revendications 1 à 10, caractérisé en ce que sous la sortie (13) de distribution des produits (x) est disposé un récipient (17) de collecte de produits prenant appui sur un ressort (23) et coopérant avec un détecteur (24) agencé pour interdire la distribution de produits lorsque le récipient de collecte (17) contient une certaine quantité de produits.

12. Distributeur conforme à l'une quelconque des revendications 1 à 11, caractérisé en ce que le conteneur (3) est en carton ou matière analogue et comprend à sa partie inférieure une plaquette intercalaire (9a) supportant les produits (x, y, z), cette plaquette (9a) étant conformée pour permettre l'insertion sous elle du plateau élévateur (9).

13. Distributeur conforme à l'une des revendications 10 à 12, caractérisé en ce que sous la sortie de distribution (57) ou déversoir (57) du module de produits en grains ou en poudre (z) est fixé un mélangeur (60) à la partie inférieure duquel débouche une tubulure (61) d'amenée de liquide reliée à une électrovanne (62), cette tubulure communiquant avec un pulvérisateur à ailettes (63) monté à l'intérieur du mélangeur et dont la mise en rotation est assurée par la pression du liquide de façon à mélanger ce liquide et les produits (z) qui sont déversés dans ce mélangeur.

14. Distributeur conforme à la revendication 13, caractérisé en ce que la tubulure (61) d'amenée de liquide traverse un manchon chauffant (63).

**Patentansprüche**

1. Abgabevorrichtung für Produkte, bestehend aus einem Magazin (2), das das abzugebende Produkt (x, y, z) enthält, und aus auf dem oberen Teil des Magazins vorgesehenen Mitteln (11-14, 41-43, 56), um aus diesem Magazin eine gewisse Menge von Produkten zu entnehmen und diese Menge zu einem Abgabeausgang (13, 38, 57) zu fördern, wobei der untere Teil des Magazins (2) eine Hebeplatte (9) für die Förderung des abzugebenden Produktes in den oberen Teil des Magazins aufweist, dadurch gekennzeichnet, dass das Magazin (2) für die Aufnahme eines Behälters ausgelegt ist, der die zu verteilenden Produkte (x, y, z) entweder in Form von Blöcken (x), oder in Form einer Flüssigkeit (y) oder noch in Form eines Granulates oder eines Pulvers (z) enthält, wobei der Deckel (26) und ein Bereich (25) des Behälterbodens eine Aussparung aufweisen, insbesondere was den Boden betrifft, um das Einsetzen der Hebeplatte (9) zu ermöglichen, und dass die Mittel (11-14, 41-43, 56), die am oberen Teil des Magazins für die Entnahme und die Abgabe einer gewissen Menge von Produkten vorgesehen sind, Elemente eines abnehmbaren und den zu behandelten Produkten angepassten Abgabebausteins (4, 34, 52) sind, wobei dieser Baustein eine Verbindungsöffnung mit dem oberen Teil des Behälters aufweist und der obere Teil des Behälters (2) für die Aufnahme austauschbarer Abgabebausteine (4, 34, 52) ausgelegt ist, die der Art des zu verteilenden Produktes entsprechen.

2. Abgabevorrichtung nach Anspruch 1, dadurch gekennzeichnet, dass das Magazin (2) auf einer der Seitenwände eine Öffnung zum Einsetzen des Behälters (3) aufweist.

3. Abgabevorricthung nach einem der Ansprüche 1 oder 2, angepasst für die Abgabe von festen blockförmigen Produkten (x), dadurch gekennzeichnet, dass der Abgabebaustein (4) mit dem Behälter (3) durch eine Öffnung (10) in Verbindung steht, die beinahe dem waagerechten Querschnitt des Magazins entspricht, und einen in der Ebene der erwähnten Öffnung und in Richtung des Abgabeausganges (13) beweglichen Schieber (11) aufweist.

4. Abgabevorrichtung nach Anspruch 3, dadurch gekennzeichnet, dass sie Mittel zur selbsttätigen und aufeinanderfolgenden Steuerung des Plattenhubes (9) in Richtung des Abgabebausteins (4) auf einer Höhe (h), die einer Blockreihe (x) entspricht, damit diese Blockreihe in den Abgabebaustein eingeschoben wird, sowie Mittel zur selbsttätigen Steuerung des Schieberhubes (11) in Richtung des Abgabeausganges (13), damit die

Blockreihe zu diesem Ausgang befördert wird, und anschliessend zur Steuerung des Schieberrückzuges in Ruhestellung aufweist.

5. Abgabevorrichtung nach Anspruch 4, dadurch gekennzeichnet, dass der Schieber (11) am Ende einer Zahnstange (12) angebracht ist, die durch Drehung eines Zahnrades (14) in Bewegung gesetzt wird.

6. Abgabevorrichtung nach einem der Ansprüche 4 oder 5, dadurch gekennzeichnet, dass der Rückzug des Schiebers (11) in Ruhestellung durch einen Endschalter (19) gesteuert wird.

7. Abgabevorrichtung nach einem der Ansprüche 1 oder 2, angepasst zur Abgabe einer Flüssigkeit (y), dadurch gekennzeichnet, dass der Behälter (3) ein verformbares Gefäss (31) enthält, das die Flüssigkeit aufnimmt, dass der Abgabebaustein (34) eine Dosierkammer (36) aufweist, wobei das Gefäss (31) mit der Dosierkammer (36) über ein Magnetventil (37) verbunden ist, und dass diese Dosierkammer (36) an ihrem Abgabeausgang mit einem Magnetventil (40) versehen ist und einen in Richtung des erwähnten Abgabeausganges bewegbaren Schieber (41) enthält.

8. Abgabevorrichtung nach Anspruch 7, dadurch gekennzeichnet, dass sie Mittel zur selbsttätigen und aufeinanderfolgenden Steuerung des Plattenhubes (9) in Richtung des Abgabebausteins (34) auf einer Höhe, die einem dem Inhalt der Dosierkammer (36) gleichen Flüssigkeitsvolumen (y) entspricht, damit diese Dosierkammer mit der erwähnten Flüssigkeit gefüllt wird, Mittel zur selbsttätigen Steuerung der Schliessung des gefässnahen (31) Magnetventils (37) sowie der Öffnung des abgabestutzennahen (38) Magnetventils (40) sowie Mittel zur selbsttätigen Steuerung des Kolbens (41) in Richtung des Abgabestutzens, damit die Flüssigkeit durch diesen Stutzen abgegeben wird, und anschliessend zur Steuerung des Kolbenrückzuges in Ruhestellung aufweist.

9. Abgabevorrichtung nach einem der Ansprüche 7 oder 8, dadurch gekennzeichnet, dass der Abgabestutzen (38) mit einem Magnetventil (45) für die Steuerung der Wasser- oder Verdünnungsflüssigkeitszugabe ausgerüstet ist.

10. Abgabevorrichtung nach einem der Ansprüche 1 oder 2, angepasst zur Abgabe granulatoder pulverförmiger Produkte (z), dadurch gekennzeichnet, dass der Abgabebaustein (52) an dessen unterem Teil mit einer angetriebenen Schnecke (53) versehen ist, deren Schaufeln (54) für die Förderung der im Behälter (3) enthaltenen Produkte (z) in die dem Abgabebaustein (55) integrierte Dosierkammer (55) ausgelegt sind, und dass diese Dosierkammer mit einem in Richtung des Abgabeausganges (57) beweglichen Kolben (56) ausgerüstet ist.

11. Abgabevorrichtung nach einem der Ansprüche 1 bis 10, dadurch gekennzeichnet, dass unter dem Abgabeausgang (13) für die Produkte (x) ein Aufnahmegefäss (17) angeordnet ist, das sich auf einer Feder (23) stützt und unter Mitwirkung eines Lastfühlers (24) die Abgabe der Produkte sperrt, wenn das Aufnahmegefäss (17) eine zu grosse Menge von Produkten enthält.

12. Abgabevorrichtung nach einem der Ansprüche 1 bis 11, dadurch gekennzeichnet, dass der Behälter (3) aus Pappe oder einem ähnlichen Werkstoff hergestellt ist und dass an dessen unterer Seite ein Zwischenlageplättchen (9a) für die Abstützung der Produkte (x, y, z) angeordnet ist, wobei dieses Plättchen (9a) für die unterseitige Einschiebung der Hebeplatte (9) ausgelegt ist.

13. Abgabevorrichtung nach einem der Ansprüche 10 bis 12, dadurch gekennzeichnet, dass unter dem Abgabeausgang (57) oder Abgabetrichter (57) des für die Behandlung von granulatoder pulverförmigen Produkten (z) ausgelegten Bausteins eine Mischvorrichtung (60) angeordnet ist, an deren unterem Teil eine Zufuhrleitung (61) mit angeschlossenem Magnetventil (62) mündet, wobei diese Zufuhrleitung mit einem in der Mischvorrichtung eingebauten und durch den Druck der Lösungsflüssigkeiten angetriebenen Flügelzerstäuber (63) verbunden ist, damit diese Flüssigkeit mit den in der Mischvorrichtung geschütteten Produkten vermischt werden kann.

14. Abgabevorrichtung nach Anspruch 13, dadurch gekennzeichnet, dass die Zufuhrleitung (61) mit einem Heizmantel (63) versehen ist.

**Claims**

1. Product dispenser including a magazine (2) receiving product (x, y, z) to be distributed, means (11-14, 41-43, 56) at the upper part of the magazine to take from a given quantity of products and move this quantity to a dispenser outlet (13, 38, 57), the lower part of magazine (2) including an elevator plate (9) designed to move the product to be dispensed to the top of the magazine, characterized in that said magazine (2) is designed for reception of container (3) containing the product to be dispensed (x, y, z) as blocks (x), liquid (y) or grains or powder (z), after first cutting off cover (26) of the container and section (25) of the container bottom, in particular as regards the bottom to allow insertion of elevator plate (9), and in that means (11-14, 41-43, 56) provided at the top of the store to take and dispense a given quantity of products are part of removable dispensing module (4, 34, 52) suited to the nature of the product to be dispensed, said module having an opening for connection or interface with the upper part of the container, the upper part of said magazine (2) being adapted to be fitted interchangeably with dispensing modules (4, 34, 52) according to the type of product to be dispensed.

2. Dispenser as per Claim 1, characterized in that said magazine (2) is open on one of its sides to allow installation of container (3).

3. Dispenser as per one of Claims 1 or 2, adapted to dispense solid products as blocks (x), characterized in that dispensing module (4) communicates with container (3) by an opening (10) roughly corresponding to the horizontal section of the magazine and including plunger (11) moving in translation in the plane of said opening towards dispensing outlet (13).

4. Dispenser as per Claim 3, characterized in that it includes means to automatically and consecutively control elevation of table (9) towards dispensing module (4) by a height (h) corresponding to a row of blocks (x) to engage this row of blocks in the dispensing module, means to automatically control movements of plunger (11) towards this outlet, then the return of the plunger to neutral position.

5. Dispenser as per Claim 4, characterized in that plunger (11) is attached to the end of rack (12) working with toothed wheel (14) driven in rotation.

6. Dispenser as per one of Claims 4 or 5, characterized in that the return of plunger (11) to neutral position is controlled by limit switch (19).

7. Dispenser as per one of Claims 1 or 2, adapted to dispense a liquid (y), characterized in that container (3) includes deformable receptacle (31) containing said liquid, in that module (34) includes dose chamber (36), said receptacle (31) communicating with dose chamber (36) by solenoid valve (37), in that said dose chamber (36) includes solenoid valve (40) near its dispensing outlet (38) and contains a piston (41) moving in translation towards said outlet.

8. Dispenser as per Claim 7, characterized in that it includes means to automatically and successively control elevation of table (9) towards dispensing module (34) by a height corresponding to a volume of liquid (y) roughly equal to the internal volume of dose chamber (36) in order to fill said chamber by said liquid, means to automatically control closing of solenoid valve (37) adjacent to receptacle (31) and opening of solenoid valve (40) adjacent to dispensing outlet (38), and facilities to automatically control movement of piston (41) towards the dispensing outlet to expel the liquid through this outlet, then the return to this piston to neutral position.

9. Dispenser as per one of Claims 7 or 8, characterized in that dispensing outlet (38) includes solenoid valve (45) to control the inlet of water or dilution liquid.

10. Dispenser as per one of Claims 1 or 2, adapted to dispense products in grains or powder (z), characterized in that dispensing module (52) includes worm screw (53) at the bottom, driven in rotation and whose blades (54) are arranged to take products (z) contained in container (3) and introduce them into dose chamber (55) integrated in module (52), and in that said module includes piston (56) moving in translation towards product-dispensing outlet (57).

11. Dispenser as per one of Claims 1 to 10, characterized in that under dispensing outlet (13) for products (x) is located product-collecting receptacle (17) supported by spring (23) and working with detector (24) designed to prevent dispensing of products when collecting receptacle (17) contains a certain quantity of products.

12. Dispenser as per one of Claims 1 to 11, characterized in that container (3) is made of cardboard or similar and includes an interposing panel (9a) in the lower part supporting products (x, y, z), said panel (9a) being shaped to allow insertion of elevator table (9) under it.

13. Dispenser as per one of Claims 10 to 12, characterized in that under dispensing outlet (57) or spout (57) of the module for products in grains or powder (z) is mounted mixer (16) out of whose lower part protrudes liquid supply tube (61) connected to solenoid valve (62), said tube communicating with bladed pulverizer (63) mounted inside the mixer and driven in rotation by the liquid pressure to mix this liquid with products (z) poured into said mixer.

14. Dispenser as per Claim 13, characterized in that liquid supply tube (61) crosses heating sleeve (63).

0 095 981

FIG_1

FIG_2

FIG_6

26

27

28

28

3

FIG_3

27

25

9a

FIG_4

FIG_5

13

FIG_10

FIG_8

FIG_9

FIG_7

FIG_11